# EUROPEAN PATENT SPECIFICATION

(11) **EP 0 938 211 B1**
(45) Date of publication and mention of the grant of the patent: **22.10.2003**
(21) Application number: 98480072.2
(22) Date of filing: 29.10.1998
(51) Int. Cl.: H04L 12/56, H04Q 11/04

(54) **Flow control process using an out-of-band flow control channel**
Flusssteuerungsverfahren unter Verwendung eines Ausserband-Flusssteurungkanals
Procédé de contrôle du flux utilisant un canal de contrôle de flux hors bande

(30) Priority: 19.02.1998 EP 98480006
(43) Date of publication of application: 25.08.1999
(73) Proprietor: INTERNATIONAL BUSINESS MACHINES CORPORATION, Armonk, NY 10504 (US)
(72) Inventor: Blanc, Alain, 06140 Tourrettes Sur Loup (FR); Brezzo, Bernard, Le Manoir no. 25, 06100 Nice (FR); Debord, Pierre, 06140 Tourrettes Sur Loup (FR); Widmer, Albert, Katonah, NY 10536-1313 (US)
(74) Representative: Etorre, Yves Nicolas

(56) References cited:
- WO-A-95/30318
- US-A- 4 958 341
- US-A- 5 638 518
- WIDMER A X ET AL: "A DC-BALANCED, PARTITIONED-BLOCK, 8B/10B TRANSMISSION CODE" IBM JOURNAL OF RESEARCH AND DEVELOPMENT,US,IBM CORPORATION, ARMONK, vol. 27, no. 5, 1 September 1983 (1983-09-01), pages 440-451, XP000560679 ISSN: 0018-8646

## Description

### Technical field.

The invention can be used in the telecommunication field and particularly in switching architectures which use serial telecommunication links transporting 8B/10B coding.

### Background art.

Patent applications 96480126.0 (IBM Docket FR996040), 96480125.2 (IBM Docket FR996041), 96480117.9 (IBM Docket FR996042), 96480120.3 (IBM docket FR996045) are non published European applications illustrating a powerful self routing switch that provide high switch rate.

Modem switching architectures requires powerful switching structures and distributed elements that provides with the attachment of the telecommunications lines. Such an architecture can be found the cop ending application filed at the priority date of the present application, and entitled " Flow control process for a switching system, and system for performing the same.", and assigned to the assignee of the presents application, which is herein incorporated by simple reference.

Since the central switching structure has some limited switching capacity it may obviously happen that, on one or more in ports, the switching structures requires to reduce the incoming flow of data that arrives in the port. Obviously this is achieved by means of a special channel that provides with the flow control information for that purpose.

However since the distance between the switching structure and the different distributed entities (SCAL elements) that can be located in different premises within an industrial area tends to increase, even attaining some hundreds of meters, it is highly desirable that flow control channel does not use some additional physical media. Known techniques to provide such flow control channels may use cell overhead by dedicating some of the bits that are -conveyed to this particular flow control information. However, this results in the waste of the useful bandwith.

This requirement is even more critical when the switching architecture is based on a port expansion mode, resulting in a great number of individual switches being connected.

International Patent Application WO 95 30318 (Bews Steve et al.; Newbridge Networks Corp (CA)) entitled "ATM Switching System" discloses a communication system comprising a hub slot adapted to receive any one of a plurality of hub cards for receiving and transmitting data cells; a plurality of universal card slots; a plurality of interface cards insertable into any one of said plurality of universal card slots for receiving incoming ones of said data cells containing data and transmitting outgoing ones of said data cells containing data; an add bus having respective data links connected between individual ones of said universal card slots and said hub slot for receiving said outgoing ones of said data cells from said plurality of interface cards and transmitting said outgoing ones of said data cells to said hub slot; a drop bus having a single data link connected between all of said universal card slots and said hub slot for transmitting said incoming ones of said data cells from said hub slot to said plurality of interface cards; and means within each of said interface cards for filtering said incoming ones of said data cells from said drop bus and thereby routing said data cells to an appropriate one or more of said plurality of interface cards.

Article in IBM Journal of Research and Development entitled "A DC-Balanced, Partitioned-Block, 8B/10B Transmission Code" (Widmer A X et al.), vol.27, no.5, 1 September 1983, pages 440-451, discloses a byte-oriented binary transmission code and its implementation. This code is directed to high-speed local area networks and similar data links, where the information format consists of packets, variable in length, from about a dozen up to several hundred 8-bit bytes. The proposed transmission code translates each source byte into a constrained 10-bit binary sequence which has performance parameters near the theoretical limits for 8B/10B codes. The maximum run length is 5 and the maximum digital sum variation is 6. A single error in the encoded bits can, at most, generate an error burst of length 5 in the decoded domain. The code is implemented by partioning the coder into 5B/6B and 3B/4B subordinate coders.

### Summary of the invention

The problem to be solved by the present invention is to provide with a improved flow control channel for high speed switching architectures based on a centralized switching structure and distributed Switch Core Access Layers (S.C.A.L) entities that does not require additional physical media or use a minimum part of the available bandwith.

It is an object of the present invention to provide with a flow control channel for a switching architecture which can be used even when it is mounted on a port expansion.

This problem is solved by the flow control channel of the present invention which uses two among the three available "comma characters" in order to create this specific flow control channel. When the cells are idle or empty, the nature of the comma character that appears at the beginning of the cell provides with the appropriate flow control bit information. For instance, should the K.28.5 character be detected, the receiving entity (either the switching structure or a distributed SCAL element) shall decode the latter as a positive flow control information, corresponding for instance to a request to reduce the incoming data flow. Also, should the K.28.1 character be decoded, then the receiving entity shall decode as an information according to which no reduction in the data flow is requested. When the incoming flow provides with data cells, the invention uses a predetermined bit within the data cell, generally that immediately follows the beginning of the cell, in order to carry the flow control information. Preferably, the invention uses a second channel which is also based on the empty cells and which is used for transporting quasi static information that does not require immediate transport. This provides with an effective combination of two distinctive control channels, a first cell frequency channel such as defined above (providing a one-bit flow control channel at -the cell rate) and a second quasi static control channel for control information that does not need immediate transport or for which real time requirements are less importance.

Thirdly, the invention can be improved by using an additionally specific mechanism that monitors, at the transmitting point, the change of one control information which is to be transport through the quasi static control channel. From the instant of the change, the mechanism initiates a counting process that automatically launches, if necessary, the creation of an empty cell so that the change of the considered control information can be transmitted and reported to the other side of the serial link within a maximum specified delay (also called edge distortion).

The invention also provides with a switching system having an effective flow control mechanism.

### Description of the drawings.

Figure 1 illustrates a switching architecture based on a centralized switching structure and some distributed SCAL entities.
Figures 2 and 3 illustrate a preferred embodiment of the invention.

### Description of the preferred embodiment of the invention.

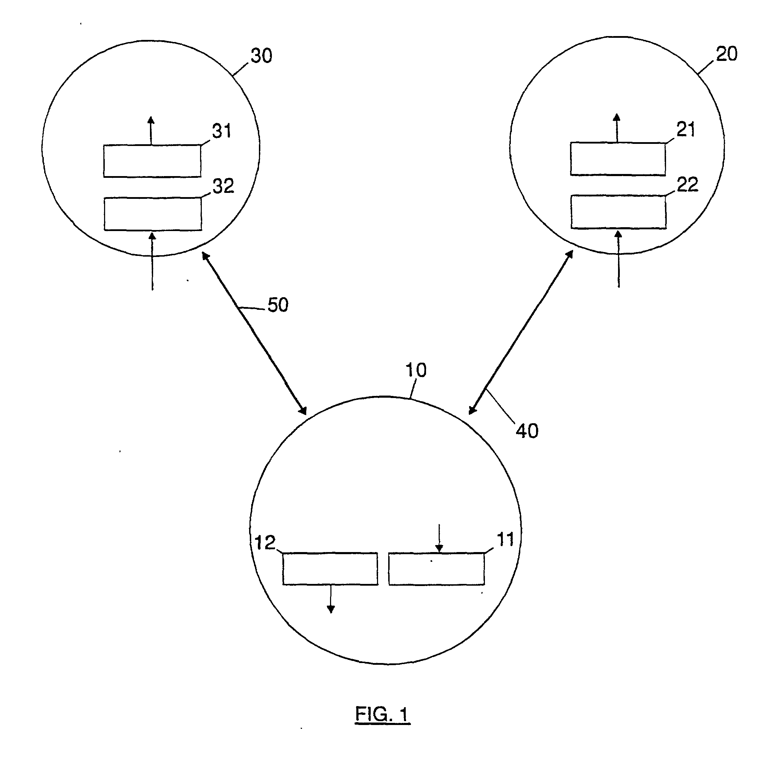

With respect to figure 1 there is shown a switching structure 10 that is used for switching cells that come from different distributed Switch Core Access Layer entities. For clarity's purpose two distinctive SCAL entities are represented on the figure: SCAL 20 that may be located within a first premise while a SCAL 30 can take place in another location. Each SCAL element is arranged in order to provide with the appropriate attachments to the particular telecommunication lines.

A serial high speed communication link 40 is established between centralized switching structure 10 and SCAL 20 and a similar communication link 50 is established between structure 10 and SCAL 30. The communication links 40 and 50 between the centralized -switching structure and the corresponding SCAL entity is based on one or more individual serial electrical or optical link that transport cells with a 8B/10B appropriate encoding, such as described in prior art document "A DC-Balanced , partitionned-Block, 8B/10B Transmission Code " by A. X. Widmer et al, in IBM J. Res. Develop. , vol. 27, n 5, September 1983 and used as described "Single-chipx - Mbd CMOS Transceiver" in IEEE Journal of Solid-State Circuits, December 1996, Vol.31, number 12 by A.X. Widmer et al.

However, it is necessary to be able to transport some control information between the switching structure and the SCAL. Two different control information coexist. A first control information is likely to change at the cell frequency, and is related to the most essential part of the switching mechanism, that is to say the flow control processing. Such an information, which size appears to be very limited (even one bit per cell), must be transported at the cell rate in order to avoid any loss of information (in the case where the switching buffers be overloaded). In the invention, this very limited information can be immediately transmitted by means of a specifically designed cell frequency channel. This is achieved by means of the use of two different comma characters among the three available ones in order to build this specific flow control channel. When the cells are idle or empty, the nature of the comma character that appears at the beginning of the cell provides with the appropriate flow control bit information. For instance, should the K.28.5 character be detected, the receiving entity (either the switching structure or a distributed SCAL element) shall decode the latter as a positive flow control information, corresponding for instance to a request to reduce the incoming data flow. Also, should the K.28.1 character be decoded, then the receiving entity shall decode it as an information according to which no reduction in the data flow is requested. When the incoming flow provides with data cells, no comma character appears in the data flow and, in this case, the invention advantageously uses a predetermined bit within the data cell, generally one that is in the first byte of the data cell in order to carry the flow control information.

In addition to the flow control information that must be transported via the serial link at the cell rate, the invention transports a second kind of control information that will be conveyed through a quasi static channel as hereinafter described. Such information include information that relates to maintenance and error recovery procedures and only requires a transport to the opposite side within a predetermined delay that correspond to a given edge distortion. In the invention, this second kind of information is processed as follows. In the centralized switching structures, as well as the associated distributed SCAL elements, the invention uses a set of registers for storing the states of the control information to be conveyed. For instance, Switching structure 10 includes registers 11 and 12 . Register 11 stores the control bit information that is received from an internal (not shown) processor or specific hardware circuits and which to be transmitted through one of the two illustrated serial link. Conversely, register 12 receives the control bit information from one of the two serial link, and provides with the latter to the internal processing unit or to the above mentioned hardware circuitry. Similarly, SCAL 20 (resp. 30) includes two registers 21 and 22 (resp. 31 and 32). Register 21 (resp. register 31) stores the information that is received from serial link 40 (resp. 50) and which is to be provided to the internal electronic circuitry of SCAL 20 (resp. SCAL 30). Register 22 (resp. register 32) stores the information that is received from the internal hardware circuit inside SCAL 20 (resp. SCAL 30) and which has to be conveyed through the serial link 40 (resp. 50).

In order to ensure optimal operating of the switch, it is absolutely necessary that the contents of register 11 must be reported and copied within register 21 (resp. 31) during the specified delay that complies with the desired edge distortion specifications. Conversely, the contents of the register 22 (resp. 32) must be conveyed through the corresponding link and reported to register 12 of switching structure 10. In the preferred embodiment of the invention, this is achieved by means of a second quasi static channel which is based on the empty cells. Considering for instance the transport of the control information that is stored within register 11 and which must be conveyed through link 40, and copied into register 22.

When no data cell is to be transmitted, the cell transmission system that is used within switching structure uses the contents of register 11 and transmits the latter at a predetermined position within the empty cell that begins with a comma character. It should be noticed that comma character is one of the two comma characters mentioned above so that, concurrently, the two types of control information - the flow control and the control information - can be transported. In the preferred embodiment of the invention, the contents of register 11 is located in the first byte that immediately follows the comma character. This information can then be detected and reported into the corresponding register 21 (resp. 31 ) of SCAL 20 (resp. SCAL 30). The man skilled in the art will obviously design the circuit achieves the comma character -detection, and then provides with the transfer of the contents of a predetermined position of the cell into the appropriate register 21 (resp. 31).

Similarly, the contents of register 22 (resp. 32) is transmitted in empty cells at a predetermined location, which is, in the preferred embodiment, the first byte of the empty cell so that the contents can be copied into register 12 of centralized switching structure 10.

The quasi static channel in accordance with the present invention is enhanced by an additional mechanism that ensures that the contents of the registers 11 (within centralized structure 10 ) be reported into its corresponding register 21 (resp. 31) within an maximum delay that corresponds to the desired edge distortion requirements. To achieve this, a monitoring circuit is used for detecting any change within the contents of register 11 and, in response to such a change, to initiates a counting process of k cell cycles. When an empty cell appears to be transmitted by centralized structure 10 - because of a instantaneous lack of data cell, the mechanism uses that empty cell in order to transport the contents of register 11 and reset the counting process. However, when the counting process completes without the occurrence of any empty cell, the invention launches the creation of an empty cell that will ensure the transportation of the contents of register 11 to the corresponding register 21 (resp. 31) at the opposition side of SCAL 20 (resp. SCAL 30). Therefore, the maximal distortion will be limited to k cell cycles.

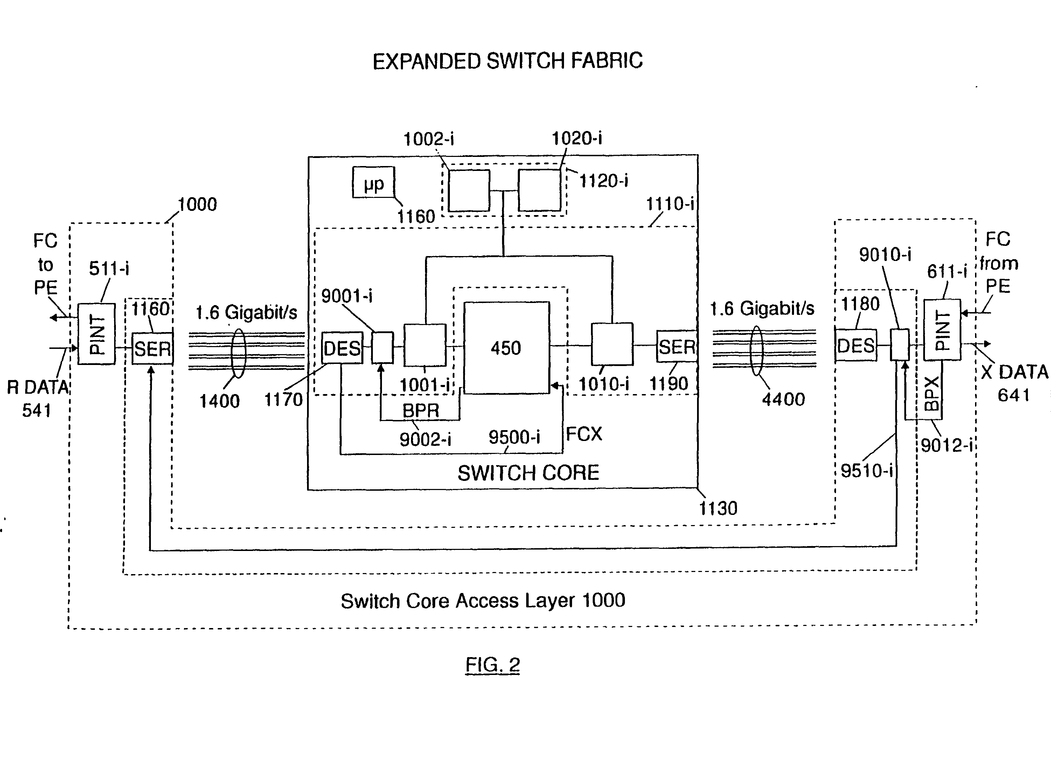

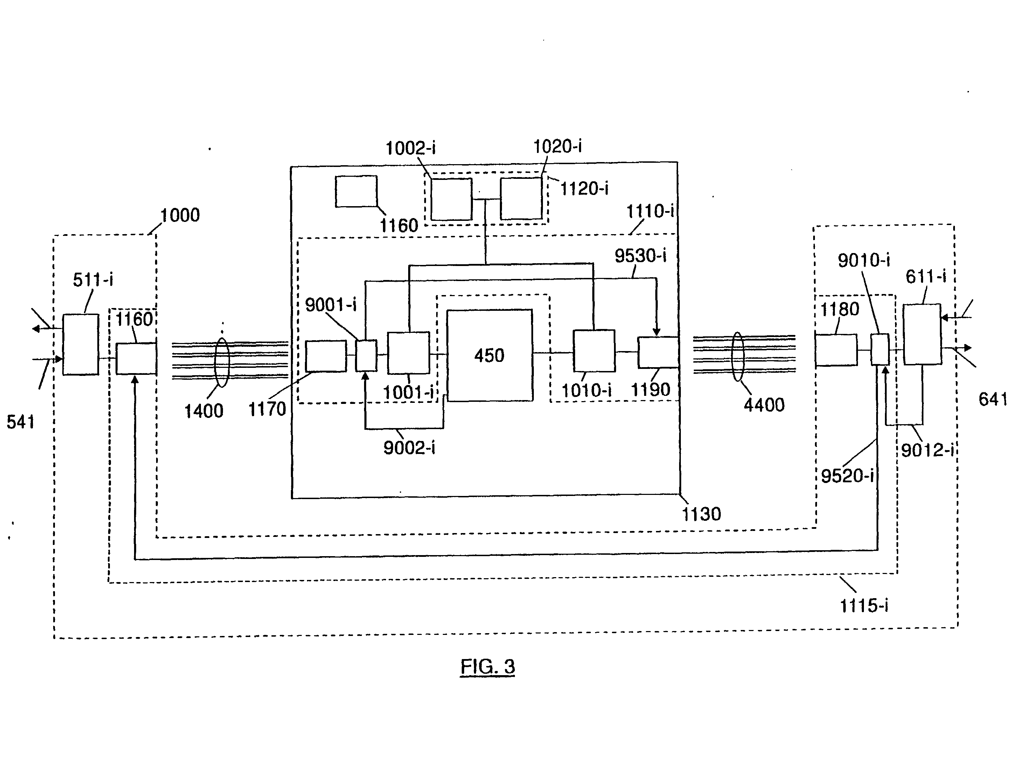

In the invention, the creation of the empty cell is advantageously performed by means the creation of a local flow control signal such as illustrated in figures 2 and 3. Figures 2 and 3 show the particular structure of the centralized switching structure 10, and the SCAL entity 20 (resp. 30) and which is particularly described in the above mentioned cop ending application.

In figure 2, there is shown how the local flow control signal is generated in order to create an empty cell so that the contents of register 11 can be transported through the serial link 40 (resp. 50).

Basically, the centralized switching structure 1130 comprises a switch core element 450 providing with the switching of a set of n input and output ports, a set of n dedicated modules 1110, one module for one input and output port, that comprises a deserializer DES 1170, a serializer SER 1190, a set of two routing control circuits 1001-i and 1010-i whose function is described with many details in the above mentioned application, and a cell storage 1 which is used for providing some queuing resources for the data cells. The centralized switching structure 1130 further comprises processing resources under the form of a processor 1160 and a set of n storage 1120 that provides the space required for the storage of the routing bit map that is associated to the routing index.

In order to achieve the empty cell creation, module 1110 uses a edge detector for detecting the changes brought to register 11 (not shown in the figure 2) and a hardware counter that is used for counter a predetermined number of cell cycles (for instance k). In the invention, whenever the SER serializer 1190 that is represented in the figure 2 transmits an empty cell through the serial link, the latter incorporates the contents of the register 11 into the cell, at the appropriate location so that it can be detected by the deserializer 1180 at the opposite side of the serial link 40 (represented by multiwires 4400) and finally copied into the register 21 (not shown in Figure 2).

When the counting process reaches the k value without occurrence of an empty cell, then a specific processing occurs within the boundaries of module 1110, what causes deserializer 1170 to transmit a FCX flow control Transmit signal on lead 9500-i to the switch core element 450 during one cell cycle. The transmission of this signal is particularly described in the above mentioned application, and is very simple to embody since the module 1110 and the switch core 450 are located at the same physical area. This FCX flow control transmit signal causes an empty cycle at the output port of 450 and, thus, provides serializer 1190 with an appropriate empty cell that is used for transport the state of the register 11.

With respect to figure 3, there is shown the creation of an empty cell between SCAL 20 and switching structure 10 so that the contents of register 22 (for instance) within SCAL element 20 can be conveyed to switching structure 10. In order to achieve the empty cell creation, module 1115 uses a edge detector for detecting the changes brought to register 22 (not shown in the figure 3) and a hardware counter that is used for counter a predetermined number of cell cycles (for instance k).

In the invention, whenever the SER serializer 1160 that is represented in the figure 3 transmits an empty cell through the serial link, the latter incorporates the contents of the register 22 into the cell, at the appropriate location so that it can be detected by the deserializer 1170 at the opposite side of the serial link 40 (represented by multiwires 1400) and finally copied into the register 12 (not shown in Figure 3).

When the counting process reaches the value k without occurrence of an empty cell, then a specific processing occurs within the boundaries of module 1115, what causes deserializer 1180 to transmit a FCR flow control Receive signal on lead 9520-i to the PINT element 511-i during one cell cycle. The transmission of this signal is particularly described in the above mentioned application, and is very simple to embody since the module 1115 and the PINT 511 are located at the same physical area. This FCR flow control receive signal causes an empty cycle at the output port of 511 and, thus, provides serializer 1160 with an appropriate empty cell that is used for the transport the state of the register 22.

## Claims

1. Process for controlling data flow of a switching architecture comprising a switching structure (10) and distributed Switch Core Access Layer elements (20, 30) connected through at least one communication links (40, 50) wherein the data flow is coded in accordance with the 8B/10B coding, **characterized in that** :
two among three available Comma characters are inserted in empty cells and used for creating an additional flow control channel which is parallely conveyed with the normal data flow, wherein the nature of the Comma character that appears at the beginning of an idle or empty cell provides flow control information.

2. The process according to claim 1 wherein, when the cell are idle or empty, the nature of the comma character appearing at the beginning of the cell provides with the appropriate flow control bit information to be transmitted on said communication link.

3. The process according to claim 1 or 2 wherein a K.28.5 comma character is used and decoded by the receiving entity as a positive flow control information corresponding to a request to reduce the data flow.

4. The process according to any one of claims 1 to 3 wherein when an incoming flow provides data cells, a predetermined bit is used within the data cells for carrying the flow control information.

5. The process according to any one of claims 1 to 4, further comprising the step of using the empty cells as a second channel for transporting quasi-static information that does not require immediate transport.

6. The process according to claim 5 wherein the quasi-static information is copied into the empty cell following the comma character for transport with the cell.

7. The process according to claim 6 wherein the quasi-static information is to be transported within a maximum amount of time after a triggering event and wherein the process further comprises the steps of:
• monitoring for the trigering event;
• tracking the time passed following the trigering event;
• in response to the passage of the maximum time after the triggering event without transporting the quasi-static information, causing an empty cell to be transported through the switching structure.

8. The process according to claim 7 wherein the triggering event is an updating of the quasi-static information and wherein the maximum time is counted in cell cycles.

9. System comprising means adapted for carrying out the process according to any one of the preceding claims.

## Patentansprüche

1. Prozess zum Steuern des Datenflusses einer
Vermittlungsarchitektur, die eine Vermittlungsstruktur (10) und verteilte SCAL-Einheiten (Switch Core Access Layer) (20, 30) umfasst, die durch mindestens eine
Kommunikationsverbindung (40, 50) miteinander verbunden sind, wobei der Datenfluss gemäß der 8B/10B-Codierung codiert wird und der Prozess **dadurch gekennzeichnet ist, dass**
zwei der drei verfügbaren Kommazeichen in leere Zellen eingefügt und zum Erzeugen eines zusätzlichen Flusssteuerungskanals verwendet werden, dessen Datenfluss parallel zum normalen Datenfluss übertragen wird, wobei je nach Art des am Anfang einer freien oder leeren Zelle befindlichen Kommazeichens entsprechende Flusssteuerungsdaten bereitgestellt werden.

2. Prozess nach Anspruch 1, in dem im Falle einer freien oder leeren Zelle je nach Art des am Anfang der Zelle befindlichen Kommazeichens die entsprechenden Bitdaten zur Flusssteuerung bereitgestellt werden, die über die Kommunikationsverbindung zu übertragen sind.

3. Prozess nach Anspruch 1 oder 2, in dem gemäß einer Aufforderung zum Verringern des Datenflusses ein K.28.5-Kommazeichen verwendet und von der empfangenden Einheit als positive Flusssteuerungsinformation decodiert wird.

4. Prozess nach einem beliebigen der Ansprüche 1 bis 3, in dem beim Bereitstellen von Datenzellen durch einen ankommenden Datenfluss ein vordefiniertes Bit innerhalb der Datenzellen zum Tragen der Flusssteuerungsdaten verwendet wird.

5. Prozess nach einem beliebigen der Ansprüche 1 bis 4, der ferner den Schritt umfasst, die leeren Zellen als einen zweiten Kanal zum Übertragen von quasi-statischen Daten zu verwenden, die nicht sofort übertragen werden müssen.

6. Prozess nach Anspruch 5, in dem die quasi-statischen Daten zur Übertragung mit der Zelle hinter das Kommazeichen in der leeren Zelle kopiert werden.

7. Prozess nach Anspruch 6, in dem die quasi-statischen Daten nach einem auslösenden Ereignis innerhalb einer maximalen Zeitspanne übertragen werden müssen und wobei der Prozess ferner folgende Schritte umfasst:
. das Erkennen des auslösenden Ereignisses;
. das Messen der nach dem auslösenden Ereignis verstreichenden Zeit;
. das Veranlassen der Übertragung einer leeren Zelle durch die Vermittlungsstruktur als Reaktion auf das Verstreichen der maximalen Zeitspanne nach dem auslösenden Ereignis, ohne dass die quasi-statischen Daten übertragen wurden.

8. Prozess nach Anspruch 7, in dem es sich bei dem auslösenden Ereignis um die Aktualisierung der quasi-statischen Daten handelt und die maximale Zeitspanne in Zellzyklen gezählt wird.

9. System, welches Mittel umfasst zur Durchführung des Prozesses nach einem der vorhergehenden Ansprüche.

## Revendications

1. Procédé destiné à réguler un flux de données d'une architecture de commutation comprenant une structure de commutation (10) et des éléments répartis de couche d'accès au coeur de commutateur (20, 30) connectés par l'intermédiaire d'au moins une liaison de communication (40, 50) dans lequel le flux de données est codé conformément au codage 8B/10B, **caractérisé en ce que** :
deux parmi trois caractères de virgule disponibles sont insérés dans des cellules vides et utilisés pour créer un canal de régulation de flux supplémentaire qui est transporté en parallèle au flux de données normal, dans lequel la nature du caractère de virgule qui apparaît au début d'une cellule inactive ou vide fournit des informations de régulation de flux.

2. Procédé selon la revendication 1, dans lequel, lorsque la cellule est inactive ou vide, la nature du caractère de virgule apparaissant au début de la cellule fournit les informations binaires de régulation de flux appropriées à transmettre sur ladite liaison de communication.

3. Procédé selon la revendication 1 ou 2, dans lequel un caractère de virgule K.28.5 est utilisé et décodé par l'entité de réception comme informations de régulation de flux positives correspondant à une demande de réduire le flux de données.

4. Procédé selon l'une quelconque des revendications 1 à 3, dans lequel, lorsqu'un flux entrant fournit des cellules de données, un bit prédéterminé est utilisé à l'intérieur des cellules de données pour transporter les informations de régulation de flux.

5. Procédé selon l'une quelconque des revendications 1 à 4, comprenant en outre l'étape consistant à utiliser les cellules vides comme un second canal pour transporter des informations quasi-statiques qui ne requièrent pas un transport immédiat.

6. Procédé selon la revendication 5, dans lequel les informations quasi-statiques sont copiées dans la cellule vide après le caractère de virgule en vue d'un transport avec la cellule.

7. Procédé selon la revendication 6, dans lequel les informations quasi -statiques sont à transporter en moins d'un temps maximum après un événement de déclenchement et dans lequel le procédé comprend en outre les étapes consistant à :
• surveiller l'événement de déclenchement,
• suivre le temps écoulé après l'événement de déclenchement,
• en réponse à l'écoulement du temps maximum après l'événement de déclenchement sans transport des informations quasi -statiques, amener une cellule vide à être transportée au travers de la structure de commutation.

8. Procédé selon la revendication 7, dans lequel l'événement de déclenchement est une mise à jour des informations quasi-statiques et dans lequel le temps maximum est compté en cycles de cellules.

9. Système comprenant des moyens adaptés pour supporter le procédé selon l'une quelconque des revendications précédentes.
